# EUROPEAN PATENT APPLICATION

(11) **EP 1 098 315 A1**
(43) Date of publication of application: **09.05.2001**
(21) Application number: 99941806.4
(22) Date of filing: 10.09.1999
(51) Int. Cl.: G11B 20/10

(54) **ELECTRONIC DEVICE, METHOD OF SIGNAL PROCESSING, METHOD OF INPUT SIGNAL SWITCHING, AND DOWNLOAD SYSTEM**

(30) Priority: 10.09.1998 JP 25636198
(71) Applicant: Sony Corporation, Tokyo 141-0001 (JP)
(72) Inventor: UTSUMI, Yoshimasa, Sony Corporation, Shinagawa-ku, Tokyo 141-0001 (JP); ONO, Kenichi, Sony Corporation, Shinagawa-ku, Tokyo 141-0001 (JP)
(74) Representative: Pratt, Richard Wilson
(86) International application number: JP9904955
(87) International publication number: WO0016328

(57) **Abstract**

A control CPU 79 monitors whether or not an input is obtained from an optical digital input interface 72, thereby discriminating whether or not an optical cable is connected to the optical digital input interface 72. The control CPU 79 discriminates whether or not an IEEE1394 interface of another equipment is connected, in accordance with the presence/absence of an ACK signal sent back in an IEEE1394 interface 71. Then, in accordance with the result of discrimination, data inputted from the IEEE1394 interface 71 is preferentially recorded onto a disc 76.

## Description

### Technical Field

This invention relates to an electronic equipment, a signal processing method, an input signal switching method, and a down-load system, in the technical field of receiving various types of data transmitted from a distant location and transmitting the data to a recording device or the like.

### Background Art

Conventionally, there is known a recording device for carrying out optical transmission (hereinafter also referred to as optical digital interface) of digital audio data transmitted from a CD (compact disc, trademark registered) using an optical cable in conformity with the IEC (International Electro-technical Commission) 958 format, so as to dub the data to a recording medium. As the recording device, there is known a DAT (digital audio tape) recorder, or an MD (mini disc) recorder using a magneto-optical disc with a diameter of 64 mm as a recording medium. The transmission in conformity with the IEC958 format is defined only unidirectionally at present.

Also, a new data transmission format called IEEE1394 is currently being proposed. For example, if the conventional transmission system is used for transmitting digital video data shot by a digital video camera or digital still camera, the real-time property cannot be maintained and therefore the movement of the image becomes awkward and discontinuous. The IEEE1394 format is proposed in order to keep the real-time property. The IEEE1394 format enables realization of a maximum data transfer rate of 100 to 400 Mbits/second and also enables connection between a digital video equipment and a personal computer.

A recording device for receiving data distributed from an information center at a distant location and for recording the received data to a recording medium is now considered. In this case, the data transmitted from the information center includes audio data as main data, and the program name, producer's profile and the like related to the main data are transmitted as sub data added to the main data. It is also considered that the sub data includes, for example, a photograph of a producer related to a musical tune to be transmitted and a static image which reminds of the musical tune, in a predetermined compression format. It is convenient if not only the main data transmitted from the information center at the distant location but also the sub data added thereto can be recorded to/reproduced from a recording medium by the recording device.

Thus, an extended MD format is proposed which enables recording of image data and text data as well as audio data by extending the conventional MD format dedicated for audio data. However, the conventional IEC958 format is not adapted for adding the sub data such as image data and text data to the main data for transmission. On the other hand, the IEEE1394 format enables transmission of audio data, image data and text data. Therefore, in the case where an MD recording device has an input terminal of the IEC958 format, a terminal of the IEEE1394 format and an analog input terminal, down-loading the audio data via the IEEE1394 cable is advantageous since it allows the text data and image data to be down-loaded simultaneously.

The present Applicant has proposed a technique of down-loading audio data as described above via an IEEE1394 cable, in the International Application PCT/JP99/01757 (filed on April 2, 1999). In the above-mentioned application, a satellite broadcast receiver for receiving music data has three output terminals, that is, IEEE1394, optical digital interface (IEC958 format) and analog audio output terminals, and audio signals are outputted only at one of these three output terminals in view of the protection of copyright for musical tunes.

In the case where the satellite broadcast receiver and the recording device are connected by an IEEE1394 cable, mutual communication is possible. However, since the optical digital interface and analog audio interface are unidirectional interfaces, the satellite broadcast receiver and the recording device cannot communicate with each other. It is now assumed that the satellite broadcast receiver outputs audio data only to the optical digital interface and that the recording device is connected with the satellite broadcast receiver via the optical digital interface and is connected with a CD player via an analog audio input terminal. In this case, in down-loading the audio data, the optical digital interface must be selected in the recording device, and conventionally, a user must carry out this selection operation. If the user makes an error in this operation, down-loading is not carried out normally. However, on the side of the satellite broadcast receiver, the failure in down-loading cannot be learned and accounting due to the down-loading is carried out as in the normal case. This is disadvantageous to the user.

### Disclosure of the Invention

The present invention provides an electronic equipment, a signal processing method, an input signal switching method and a down-load system which enable solution to the above-described problem, as follows.

An electronic equipment according to the present invention includes: a first connection terminal to which a first cable capable of bidirectional signal transmission is connected; a second connection terminal to which a second cable capable of unidirectional signal transmission is connected; communication means for communicating with an equipment connected via the first cable; and processing means for switching the first connection terminal and the second connection terminal so as to carry out predetermined processing with respect to a received signal; the processing means preferentially switching the first connection terminal rather than the second connection terminal in the case where it is confirmed as a result of the communication by the communication means that a desired equipment is connected to the first connection terminal.

A signal processing method for an electronic equipment having a first connection terminal to which a first cable capable of bidirectional signal transmission is connected and a second connection terminal to which a second cable capable of unidirectional signal transmission is connected, according to the present invention, includes: communicating with another equipment via the first cable; preferentially switching the first connection terminal rather than the second connection terminal in the case where it is confirmed as a result of the communication that a desired equipment is connected to the first connection terminal; and carrying out processing of a signal received via the switched first connection terminal.

An input signal switching method according to the present invention includes: discriminating whether or not a cable capable of bidirectional transmission is connected to a desired equipment; and in the case where it is determined that the cable is connected to the desired equipment, preferentially switching to the cable capable of bidirectional transmission rather than a cable capable of unidirectional transmission.

In a down-load system according to the present invention including a receiving device having: a receiving section for receiving data distributed from an information center; a separation section for performing predetermined signal processing on the data received by the receiving section and thus separating main data and sub data; a first transmission section for transmitting the main data separated by the separation section; and a second transmission section for transmitting the main data and the sub data, and a recording device having: a first connection terminal connected to the first transmission section via a cable capable of unidirectional transmission; a second connection terminal connected to the second transmission section via a cable capable of bidirectional transmission; discrimination means for discriminating whether or not the receiving device is connected to the second connection terminal via the cable capable of bidirectional transmission; and recording means for recording the data supplied from the first connection terminal or the second connection terminal, the cable capable of bidirectional transmission connected to the second connection terminal is preferentially selected rather than the cable capable of unidirectional transmission connected to the first connection terminal so that the data transmitted via the cable capable of bidirectional transmission is recorded, in the case where it is discriminated by the discrimination means that the receiving device is connected via the cable capable of bidirectional transmission.

In the electronic equipment, the signal processing method for an electronic equipment, and the input signal switching method according to the present invention, in the case where it is confirmed that a desired equipment is connected to the first connection terminal, the processing means preferentially switches the first connection terminal rather than the second connection terminal. Therefore, the signals transmitted from the desired equipment can be securely received.

In the down-load system according to the present invention, in the case where it is discriminated by the discrimination means that the receiving device is connected via the cable capable of bidirectional transmission, the cable capable of bidirectional transmission connected to the second connection terminal is preferentially selected. Therefore, the data transmitted from the receiving device can be securely received. Also, sub data as well as main data can be recorded.

### Brief Description of the Drawings

Fig. 1 is a block diagram showing the overall structure of a system to which the present invention is applied.
Fig.2 shows an exemplary screen displayed on a television receiver in the system shown in Fig.1.
Fig.3 is a block diagram showing an exemplary structure of a transmission side in the system shown in Fig.1.
Fig.4 shows an exemplary structure of data transmitted in the system shown in Fig.1.
Figs.5A to 5H show the multiplexing and reconstruction of the data transmitted in the system shown in Fig.1.
Fig.6 is a block diagram showing an exemplary structure of an IRD of Fig.1.
Figs.7A and 7B show a transmission mode in the IEC958 format.
Fig.8 is a block diagram showing the structure of an IEEE1394 MD according to an embodiment of the present invention.
Fig.9 shows the recording format of the IEEE1394 MD according to the embodiment of the present invention.
Figs.10A to 10I show modes connection between the IRD and IEEE1394 MD according to the embodiment of the present invention.
Fig.11 is a flowchart showing the processing procedures of a control CPU of the IEEE1394 MD according to the embodiment of the present invention.

### Best Mode for Carrying Out the Invention

A system to which the present invention is applied broadcasts a music program using digital satellite broadcast and distributes audio data related to this music program, thereby enabling a viewer to listen to music programs on trial. It also enables the viewer to easily purchase a tune on the spot if the viewer likes the tune as a result of the trial listening.

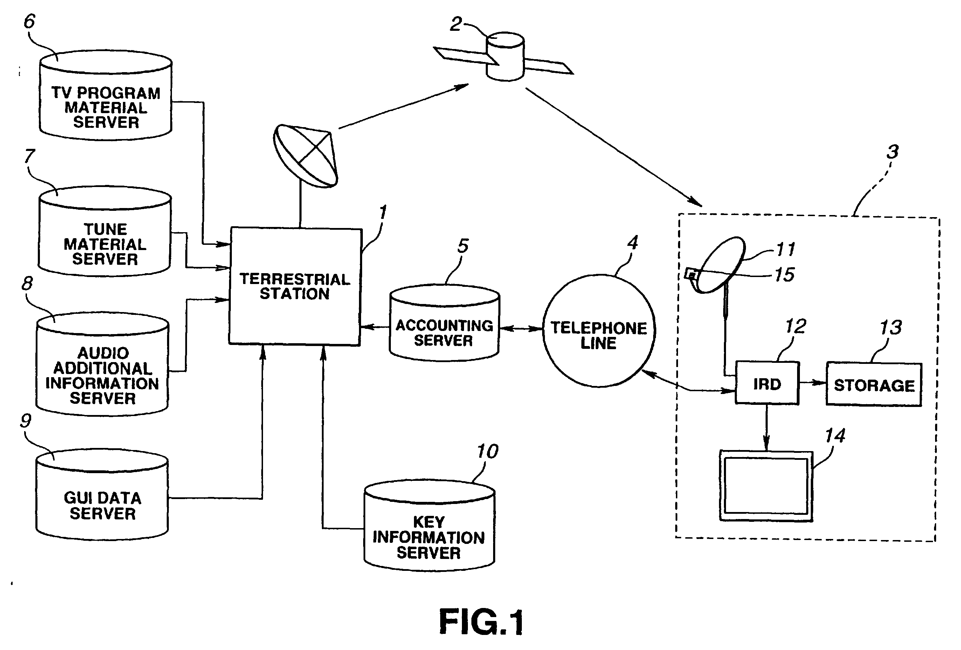

Fig.1 shows the overall structure of a music contents distribution system to which the present invention is applied. As shown in Fig. 1, a material of television program broadcast from a television program material server 6, a material of music data from a music material server 7, audio additional information from an audio additional information server 8, and GUI (graphical user interface) data from a GUI data server 9 are sent to a terrestrial station 1 of digital satellite broadcast.

The television program material server 6 is a server which provides a material of an ordinary music broadcast program. The material of music broadcast sent from the television program material server 6 includes dynamic images and sounds. In an ordinary music broadcast program, the dynamic images and sounds for promotion of a new song or the countdown of the latest hit songs is broadcast.

The music material server 7 is a server which provides an audio program using an audio channel. The material of the audio program consists of sounds. This music material server 7 sends materials of audio programs in a plurality of audio channels to the terrestrial station 1. In the program broadcast in each audio channel, the same musical tune is repeated broadcast for a predetermined unit time. The respective audio channels are independent and various methods for the use may be considered. For example, in one audio channel, recommended songs of the latest Japanese pop music may be repeatedly broadcast for a predetermined time period, and in another audio channel, recommended songs of the latest American pop music may be repeatedly broadcast for a predetermined time period, while in still another audio channel, recommended jazz tunes may be repeatedly broadcast for a predetermined time period.

The audio additional information server 8 provides the lyrics and jacket information of tunes outputted from the music material server 7.

The GUI data server 9 provides data for forming screens of a list page of tunes to be distributed and an information page of each tune. In the system to which the present invention is applied, as will be later described in detail, the lyrics of tunes to be distributed and concert information of artists can be displayed on the screen by operating the GUI on the screen. Also, selection of a tune, down-loading of a tune and reservation thereof can be carried out by operating the GUI on the screen. The data therefor is sent from the GUI data server 9. The GUI data is coded, for example, in accordance with the MHEG (Multimedia and Hypermedia Information Coding Experts Group) system.

The terrestrial station 1 multiplexes the video data and audio data, which constitute the material of music program broadcast from the television program material server 6, the audio data, which constitutes the material of the audio channels from the music material server 7, the audio additional information from the audio additional information server 8, and the GUI data from the GUI data server 9, and then transmits the multiplexed data. In this case, the video data of television program broadcast is compressed, for example, in accordance with the MPEG (Moving Picture Experts Group) 2 system, and the audio data of television program broadcast is compressed in accordance with the MPEG audio system. The audio data of the respective audio channels are compressed in accordance with two different systems, for example, the MPEG audio system and the ATRAC (Adaptive Transform Acoustic Coding) system. In multiplexing, these data are encrypted by using an encryption key from a key information server 10.

The signals from the terrestrial station 1 are received by receiving facilities 3 at each home via a satellite 2. A plurality of transponders are mounted on the satellite 2. One transponder has a transmission capability of for example, 30 Mbps. The receiving facilities 3 at each home include a parabola antenna 11, an IRD (integrated receiver decoder) 12, a storage device 13, and a television receiver 14.

The signals sent via the satellite 2 are received by the parabola antenna 11. The received signals are converted to a predetermined frequency by an LNB (low-noise block down-converter) 15 attached to the parabola antenna 11 and then supplied to the IRD 12.

The IRD 12 selects a signal of a predetermined channel from the received signals and demodulates the video data and audio data. The IRD 12 forms the screens for the list page of tunes to be distributed and the information page of each tune and the screen for EPG. The output of the IRD 12 is supplied to the television receiver 14.

The storage device 13 is for storing the down-loaded audio data. For example, an MD recorder/player, a DAT recorder/player, a DVD recorder/player and the like can be used as the storage device 13. It is also possible to use a personal computer as the storage device 13 and to save the audio data to its hard disk or CD-R.

The IRD 12 is connected with an accounting server 5, for example, via a telephone line 4. In the IRD 12, an IC card is inserted on which various information is to be stored. When the audio data of a tune is down-loaded, information on the down-load is stored onto the IC card. The information on the IC card is sent to the accounting server 5 via the telephone line 4. The accounting server 5 carries out appropriate accounting based on the down-load information and charges the fee to the viewer. By thus carrying out appropriate accounting, the copyright of the down-loaded tune can be protected.

As described above, in the system to which the present invention is applied, the terrestrial station 1 multiplexes the video data and audio data, which constitute the material of music program broadcast from the television program material server 6, the audio data, which constitutes the material of the audio channels from the music material server 7, the audio additional information from the audio additional information server 8, and the GUI data from the GUI data server 9, and then transmits the multiplexed data. When this broadcast is received by the receiving facilities at each home, the music program can be watched and the GUI screen based on the GUI data sent thereto is displayed. As the viewer carries out necessary operations while watching the GUI screen, the viewer can see the information page of each tune and also can listen to each tune on trial. Moreover, by carrying out necessary operations while watching the GUI screen, the viewer can down-load audio data of a desired tune and store it to the storage device 13.

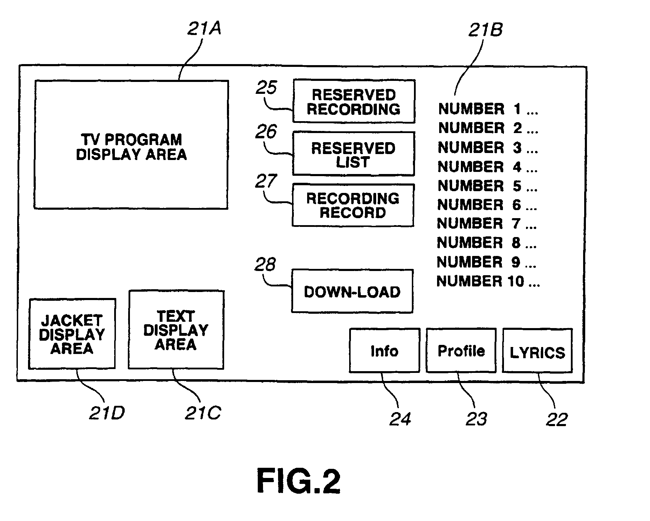

The operations carried out by the viewer at the receiving facilities 3 will now be described further in detail. When this broadcast is received by the receiving facilities 3 at each home, a screen as shown in Fig.2 is displayed on the television receiver 14. In a television program display area 21A at an upper left part of the screen, dynamic images based on the music program provided from the television program material server 6 are displayed. At an upper right part of the screen, a list 21B of tunes of the respective channels which are being broadcast on the audio channels is displayed. At a lower left part of the screen, a text display area 21C and a jacket display area 21D are set. On the right part of the screen, a lyrics display button 22, a profile display button 23, an information display button 24, a reserved recording button 25, a reserved list display button 26, a recording record display button 27, and a down-load button 28 are displayed.

The viewer searches for a tune in which (s)he is interested, while watching the names of tunes displayed in the list 21B. On finding a tune in which the viewer in interested, (s)he operates an arrow key of a remote commander attached to the IRD 12 so as to align the cursor with that tune and then presses an enter key of the remote commander. Thus, the viewer can listen to the tune on which the cursor is located, on trial. That is, since in each audio channel, the same tune is repeated broadcast during a predetermined unit time period, the viewer can switch the audio channel to the audio channel of the selected tune so as to listen to that tune while leaving the screen of the television program display area 21A as it is. In this case, a still picture of the MD jacket of that tune is displayed in the jacket display area 21D.

By locating the cursor on the lyrics display button 22 in this state and then pressing the enter key (hereinafter, the operation of locating the cursor on the button and then pressing the enter key is referred to as pressing the button), the lyrics of the tune are displayed in the text display area 21C at the timing synchronized with the audio data. Similarly, by pressing the profile display button 23 or the information display button 24, the profile of the artist corresponding to the tune or the concert information and the like is displayed in the text display area 21C. Thus, the viewer can learn what kind of tune is currently being distributed and can also learn detailed information about each tune.

If the viewer wants to purchase the tune which (s)he listened to on trial, (s)he presses the down-load button 28. As the down-load button 28 is pressed, the audio data of the selected tune is down-loaded and stored into the storage device 13. Along with the audio data of the tune, the lyric data of the tune, the profile information of the artist, the still picture data of the jacket and the like can also be down-loaded. Every time a tune is down-loaded, the information on the down-load is stored onto the IC card in the IRD 12. The information stored on the IC card is read out to the accounting server 5, for example, once a month. Thus, the copyright of the down-loaded tune can be protected.

If the viewer wants to reserve the down-load, (s)he presses the reserved recording button 25. As this button is pressed, the GUI screen is switched so that a list of tunes that can be reserved is displayed on the entire screen. This list can include tunes which are retrieved by hour, by week or by genre. When the viewer selects from the list a tune for which (s)he wants to reserve the down-load, the information about it is registered in the IRD 12. If the viewer wants to confirm the tune for which (s)he already reserved the down-load, (s)he presses the reserved list display button 26, thereby displaying the list on the entire screen. When the reserved time is reached, the tune thus reserved is down-loaded by the IRD 12 and stored into the storage device 13.

If the viewer wants to confirm the down-loaded tune, (s)he presses the recording record button 27, thereby displaying the list of the tunes that are already down-loaded, on the entire screen.

In the receiving facilities 3 of the system to which the present invention is applied, as described above, a list of tunes is displayed on the GUI screen of the television receiver 14. As the viewer selects a tune in accordance with the display on the GUI screen, (s)he can listen to that tune on trial and can also learn the lyrics of the tune, the profile of the artist and the like. Moreover, the viewer can carry out down-load of a tune, reservation thereof, and display of the down-load record and the list of reserved tunes.

As is described above, in the music contents distribution system to which the present invention is applied, a music broadcast program is broadcast and audio data of tunes are distributed by using a plurality of audio channels. Then, a desired tune can be searched for by using a list of distributed tunes or the like and the audio data can be easily saved in the storage device 13. Hereinafter, such a system will be described further in detail.

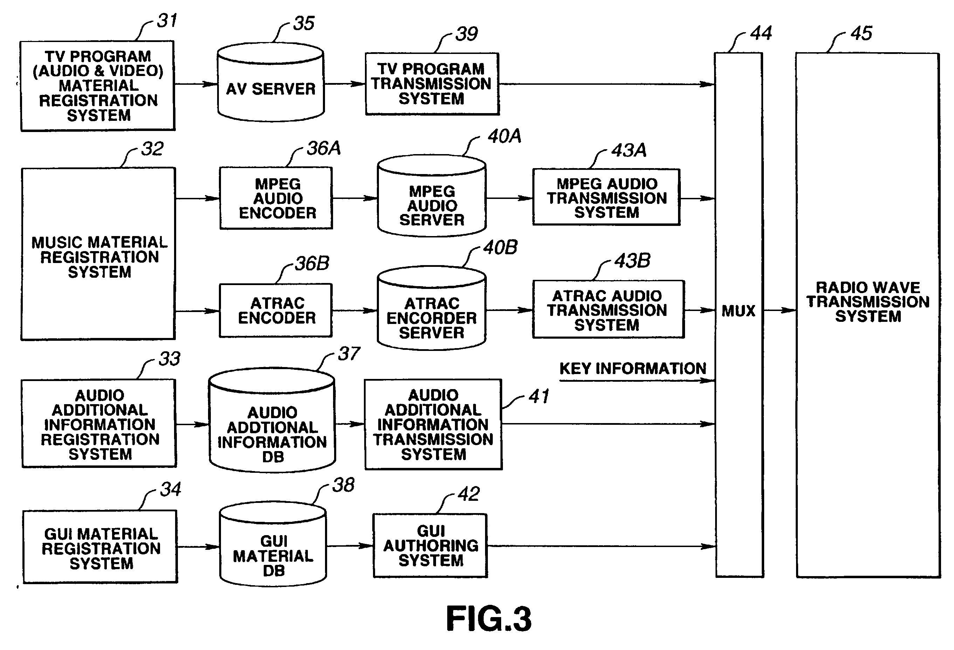

Fig.3 shows the structure of the terrestrial station 1 in the music contents distribution system to which the present invention is applied.

In Fig.3, the material data from the television program material server 6 of Fig.1 is registered to an AV server 35 via a television program material registration system 31. This material data includes video data and audio data. The data registered to the AV server 35 is sent to a television program transmission system 39, where the video data is compressed into packets, for example, in accordance with the MPEG2 system while the audio data is compressed into packets, for example, in accordance with the MPEG audio system. The output of the television program transmission system 39 is sent to a multiplexer 44.

The audio data from the music material server 7 is supplied to an MPEG2 audio encoder 36A and an ATRAC encoder 36B via a music material registration system 32, then encoded in accordance with the respective compression systems, and then registered to an MPEG audio server 40A and an ATRAC audio server 40B. The MPEG audio data registered to the MPEG audio server 40A is sent to an MPEG audio transmission system 43A, where the data is packetized and then sent to the multiplexer 44. The ATRAC data registered to the ATRAC audio server 40B is sent as quadruple-speed ATRAC data to an ATRAC audio transmission system 43B, where the data is packetized and then sent to the multiplexer 44.

The audio additional information from the audio additional information server 8 is registered to an audio additional information database 37 via an audio additional information registration system 33. The audio additional information registered to the audio additional information database 37 is sent to an audio additional information transmission system 41, where the data is packetized and then sent to the multiplexer 44.

The GUI material data from the GUI data server 9 is registered to a GUI material database 39 via a GUI material registration system 34. The GUI material data registered to the GUI material database 38 is sent to the GUI authoring system 42, where the data for the GUI screen is processed and packetized and then sent to the multiplexer 44. The GUI material data includes the still picture information of the jacket, the concert information of the artist and the like. As the still picture information, for example, image data consisting of 640×480 pixels is compressed in accordance with the JPEG (Joint Photographic Experts Group) system. The concert information is, for example, text data consisting of not more than 800 characters. These data are packetized, respectively.

In the multiplexer 44, the video packets and audio packets from the television program transmission system 39, the audio packets from the MPEG audio transmission system 43A, the quadruple-speed audio packets from the ATRAC audio transmission system 43B, the audio additional information packets from the audio additional information transmission system 41, and the GUI data packets from the GUI authoring system 42 are multiplexed on the time base and encrypted with the key information from the key information server 10 (Fig. 1).

The output of the multiplexer 44 is sent to a radio wave transmission system 45, where processing such as addition of an error correction code, modulation and frequency conversion is performed on the output and then transmitted toward the satellite 2 from the antenna.

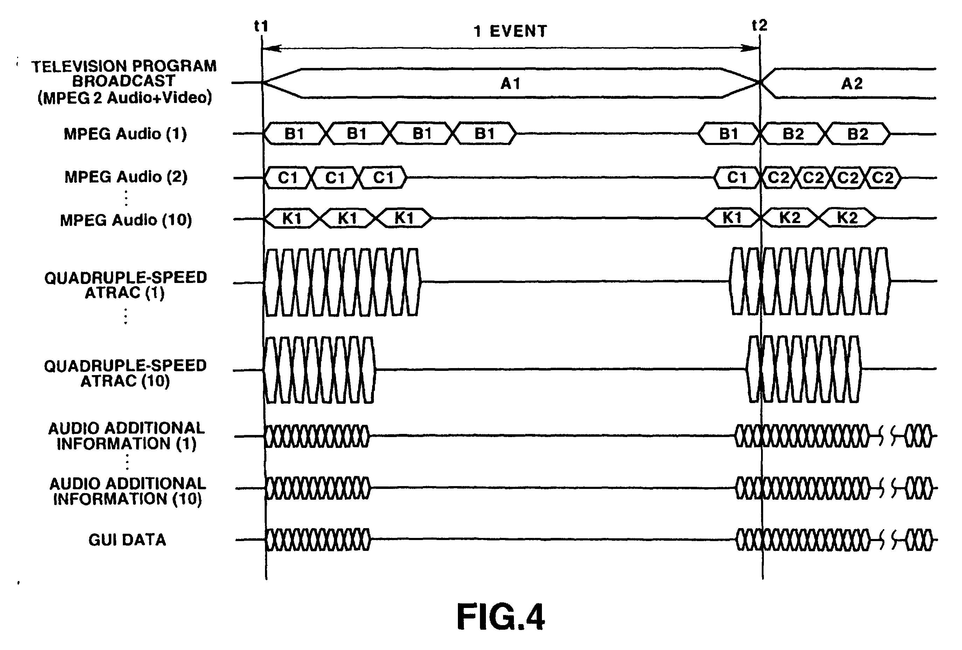

Fig.4 shows an example of data transmitted from the terrestrial station 1. Practically, the data shown in Fig.4 are multiplexed on the time base. As shown in Fig.4, one event is defined between a time point t1 and a time point t2, and the next event is defined from the time point t2. An event is a unit for changing the lineup of musical tunes and normally consists of 30 minutes or one hour. For example, it may be considered that, of the top 20 of the latest hit songs, the songs of the 20th-11th places are broadcast in a former event while the songs of the 10th-1st places are broadcast in a latter event.

As shown in Fig.4, in the event from the time point t1 to the time point t2, a music program including ordinary dynamic images and having predetermined contents A1 is broadcast. In the event starting at the time point t2, a music program having predetermined contents A2 is broadcast. In such ordinary music programs, dynamic images and sounds are broadcast.

As for the audio channels, for example, ten audio channels are prepared corresponding to the channels CH1 to CH10. In this case, on the respective audio channels CH1, CH2, CH3, ..., CH10, the same tune is repeatedly transmitted during one event. Specifically, in the event from the time point t1 to the time point t2, a tune B1 is repeatedly transmitted on the audio channel CH1 and a tune C1 is repeatedly transmitted on the audio channel CH2. Similarly, a tune K1 is repeatedly transmitted on the audio channel CH10. In the event starting at the time point t2, a tune B2 is repeatedly transmitted on the audio channel CH1 and a tune C2 is repeatedly transmitted on the audio channel CH2. Similarly, a tune K2 is repeatedly transmitted on the audio channel CH10. This is common to the MPEG audio channels and the quadruple-speed ATRAC audio channels.

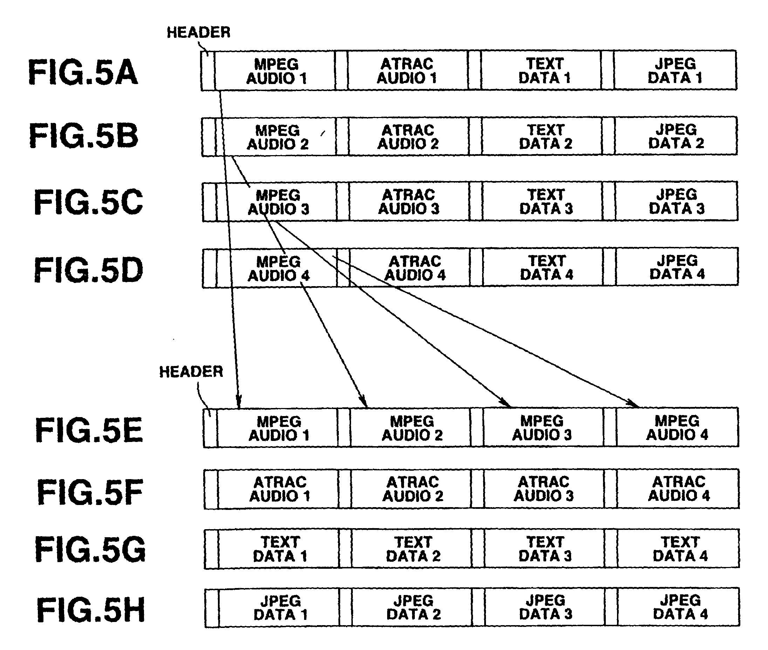

In short, in Fig.4, the MPEG audio channel and the quadruple-speed ATRAC audio channel which have the same channel number, that is, the same numeral in parentheses, are related to the same tune. The numeral in parentheses, which is the channel number of the audio additional information, is the audio additional information appended to the audio data of the same channel number. Also, the still picture data and text data transmitted as the GUI data are formed for each channel. These data are multiplexed on the time base within MPEG2 transport packets and then transmitted as shown in Figs.5A to 5D, and are reconstructed by using header information of the respective data packets in the IRD 12 as shown in Figs.5E to 5H.

The receiving facilities 3 at each home will now be described.

As shown in Fig.1, the parabola antenna 11, IRD 12, storage device 13 and television receiver 14 are prepared as the receiving facilities at each home. In this case, an MD recorder/player in conformity to the IEEE1394 standard (hereinafter referred to as IEEE1394 MD) is prepared as the storage device, and this IEEE1394 MD and the IRD 12 are connected to each other by an IEEE1394 bus. The IEEE1394 MD can store the audio data of a tune selected by the IRD 12 and the text data including the jacket data and lyrics data.

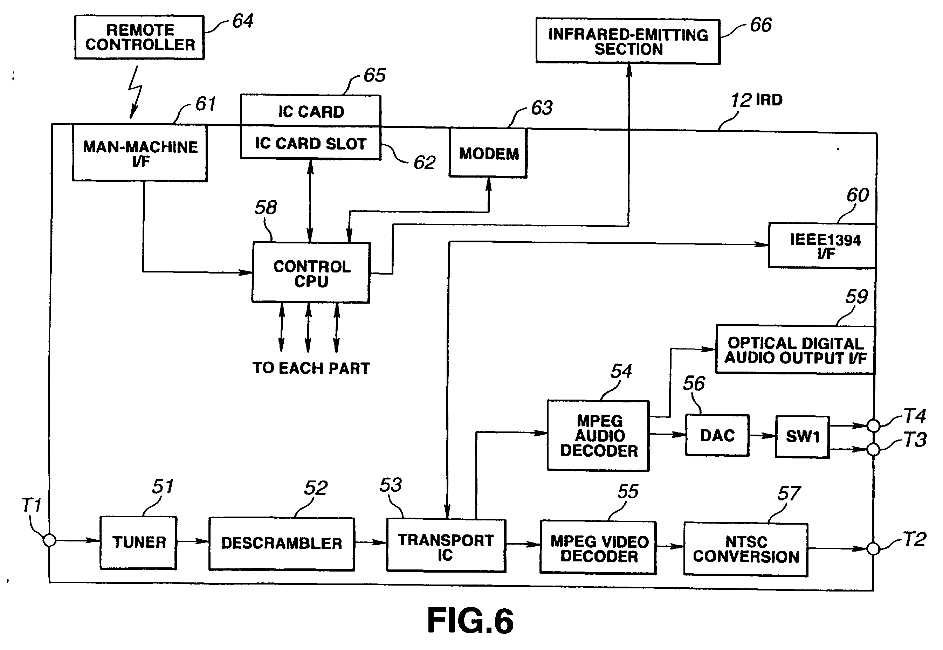

Fig.6 shows an exemplary structure of the IRD 12. This IRD 12 has an input terminal T1, an analog video output terminal T2, analog audio output terminals T3, T4, an optical digital output interface 59, an IEEE1394 interface 60, a man-machine interface 61, an IC card slot 62, a modem 63 and an infrared-emitting section 66, as external terminals or interfaces.

The input terminal T1 is a terminal for inputting an received signal converted to a predetermined frequency by the LNB 15. The analog video output terminal T2 is a terminal for supplying an analog video signal to the television receiver 14. The analog audio output terminal T3 is a terminal for supplying an analog audio signal to the television receiver 14. The analog audio output terminal T4 is a terminal for supplying an analog audio signal to an analog input of the storage device 13. The optical digital output interface 59 is in conformity with the IEC958 and transmits PCM audio data to an optical fiber cable (not shown). The IEEE1394 interface 60 transmits video data, audio data and various commands or the like to the IEEE1394 bus.

The man-machine interface 61 sends an input from a remote controller 64 to a control CPU 58. In the IC card slot 62, an IC card 65 is inserted. The modem 63 is connected to the accounting server 5 via the telephone line 4. In order to control an external equipment (for example, IEEE1394 MD 13A), the control CPU 58 can generate an infrared remote control signal for controlling the external equipment and transmit the signal to the external equipment via the infrared-emitting section 66.

A tuner 51 selects a signal of a predetermined receiving frequency from received signals supplied from the terminal T1 on the basis of a setting signal from the control CPU 58, then performs demodulation and error correction processing on the selected signal, and outputs an MPEG transport stream. A descrambler 52 receives the MPEG transport stream from the tuner 51, then receives descrambling key data stored on the IC card 65 via the IC card slot 62 and the control CPU 58, and carries out descrambling with this key data. A transport IC 53 receives a command inputted by the user from the remote controller 64, via the man-machine interface 61 and the control CPU 58, extracts MPEG video data and MPEG audio data of a desired television program from the transport stream. An MPEG video decoder 55 converts the MPEG video data supplied from the transport IC 53 to video data before data compression. An MPEG audio decoder 54 converts the MPEG audio data supplied from the transport IC 53 to audio data before data compression (PCM audio data). A D/A converter 56 converts the audio data supplied from the MPEG audio decoder 54 to an analog audio signal. A switch SW1 selectively supplies the analog audio signal supplied from the D/A converter 56 to the analog audio output terminals T3, T4.

The control CPU 58 carries out processing of the entire IRD 12. The control CPU 58 also receives a command inputted by the user from the remote controller 64 to the control CPU 58 via the man-machine interface 61. Moreover, the control CPU 58 is connected with the modem 63. Information necessary for accounting is stored on the IC card 65. The information on this IC card 65 is sent to the accounting server 5 (Fig. 1) via the telephone line 4 by using the modem 63. The control CPU 58 also takes therein the audio additional information and GUI data shown in Fig.4 from the transport stream via the transport IC. Then, on the basis of these data, the control CPU 58 forms the screen for a list page, the screen for an information page of each tune, or screen data for EPG. The screen data thus formed is written into a predetermined area of a buffer memory in the MPEG video decoder 55. Thus, the screen for the list page of the broadcast tune and for the information page of each tune or the screen for EPG can be displayed in a designated area on the screen, as shown in Fig.2.

The operation of the IRD 12 shown in Fig.6 will now be described.

In the IRD 12 shown in Fig.6, when the user selects a channel of the music contents distribution system as described above, a GUI screen as shown in Fig.2 is displayed on the screen of the television receiver 14.

At this point, received signals inputted to the terminal T1 are supplied to the tuner 41. The tuner 51 selects a signal of a predetermined receiving frequency from the received signals on the bases of a setting signal from the control CPU 58, then performs demodulation and error correction processing on the selected signal, and outputs an MPEG transport stream.

The output of the tuner 51 is supplied to the descrambler 52. The descrambler 52 is supplied with descrambling key data stored on the IC card 65, via the IC card slot 62 and the control CPU 58, and descrambles the MPEG transport stream by using the key data. The descrambled MPEG transport stream is sent to the transport IC 53.

The transport IC 53 is supplied with a command inputted by the user from the remote controller 64, via the man-machine interface 61 and the control CPU 58. In accordance with the command, MPEG video data and MPEG audio data of a desired television program are extracted from the transport stream and are sent to the MPEG video decoder 55 and the MPEG audio decoder 54, respectively.

The MPEG video data sent to the MPEG video decoder 55 is converted thereby to video data before data compression, then converted to a composite video signal by an NTSC conversion block 57, and outputted from the analog video output terminal T2 to the television receiver. The MPEG audio data sent to the MPEG audio decoder 54 is converted thereby to audio data before data compression, then converted to an analog audio signal by the D/A converter 56, and outputted from the analog audio output terminal T3 to the television receiver.

In selecting a tune from the list 21B of tunes on the GUI screen shown in Fig.2 and then listening to the selected tune on trial, the MPEG audio data is extracted from the transport IC 53, then decoded by the MPEG audio decoder 54, then digital-analog converted by the D/A converter 56, passed through the switch SW1, and outputted from the analog audio output terminal T3 to the television receiver 14 (Fig.1).

In pressing the down-load button 28 on the GUI screen shown in Fig.2 so as down-load audio data, the audio data is extracted from the transport IC 53 and then outputted from the analog audio output terminal T4, optical digital output interface 59 or IEEE1394 interface 60.

Specifically, in the case where the IEEE1394 MD is connected to the IEEE1394 interface 60, quadruple-speed ATRAC data is extracted in the transport IC 53 and then transmitted to the IEEE1394 MD via the IEEE1394 interface 60. In this case, jacket data compressed in accordance with the JPEG system is also extracted in the transport IC 53 and then transmitted to the IEEE1394 MD via the IEEE1394 interface 60. In addition, text data including the lyrics and artist's profile is also extracted in the transport IC 53 and then transmitted to the IEEE1394 MD via the IEEE1394 interface 60.

The IEEE1394 transmission format will now be described.

As the data transfer mode of the IEEE1394 system, there are two modes, that is, an isochronous transfer mode and an asynchronous transfer mode. The isochronous transfer mode guarantees transmission/reception of a predetermined quantity of packets for every 125 µsec and therefore is suitable for transfer of video data and audio data. The asynchronous transfer mode is given lower priority than the isochronous transfer mode and is suitable for file transfer. The asynchronous transfer is transfer that is not synchronous while the isochronous transfer is synchronous transfer. As described above, in accordance with the IEEE1394 system, the data transfer unit is 125 µsec. This data transfer unit is made up of cycle master data as a header, an isochronous data portion, and an asynchronous data portion. The asynchronous transfer is one-to-one transfer in which the communication counterpart is decided. The isochronous transfer enables one-to-multiple transfer in which the destination of data transfer is not decided.

In the case where the storage device 13 is connected to the optical digital output interface 59, MPEG audio data is extracted in the transport IC 53 and the MPEG audio data is transmitted to the storage device.

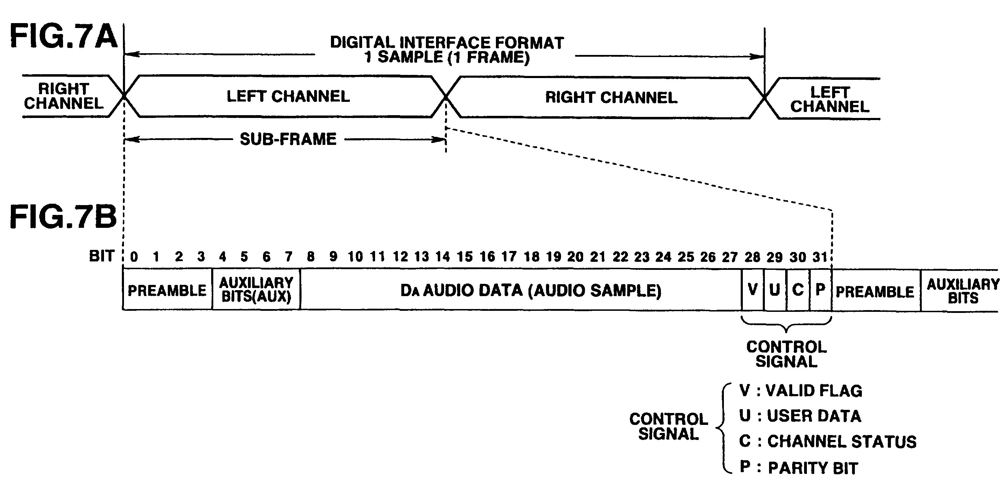

Figs.7A and 7B show a transmission mode in the IEC958 format. Fig.7A shows a signal which is actually transmitted through an optical transmission cable. In this case, one sample sampled with a sampling frequency is used as one frame, and one frame is used as a basic unit. One frame consisting of a pair of data of a left channel and data of a right channel is transmitted. Data corresponding to each channel is called sub frame, and the data configuration thereof is shown in Fig.7B.

A sub frame consists of 32-bit data. The leading 4 bits forms a preamble, which is used for synchronization and identification of the sub frame. The next 4 bits are used as auxiliary bits (AUX), and the subsequent 20 bits are digital video data DA as main data to be transmitted. The subsequent 4 bits are used as control signals and are allocated as V, U, C and P bits, respectively.

The V bit is a valid flag. When this valid flag is "0", the data of the corresponding sub frame is regarded as being valid. When this valid flag is "1", the data of the corresponding sub frame is regarded as being invalid. The recording device on the data receiving side discriminates the validity of data transmitted thereto by using the V bit.

The U bit is called user data. 1176 U bits included in the sub data (in other words, the U bits included in 1176 sub frames) on the average are collected to generate a sub code. The generated sub code employs the same form as a sub code recorded in a TOC (table of contents) area on a CD.

The C bit is channel status data. The C bit included in each sub frame is extracted so as to generate channel status data of one frame. By this channel status data, an identifier for home/professional use of the equipment on the data transmission side (data reproducing device), an identifier for the protection of copyright, presence/absence of emphasis, generation information indicating the number of times of dubbing, an equipment category code on the data transmission side (identifier indicating the type of the equipment on the transmission side), channel data, sampling frequency information or the like are managed.

The P bit is a parity bit. In the present system, an even parity is employed and is used for error detection corresponding to the data of the sub frame.

In the case where the storage device is connected to the analog audio output terminal T4, MPEG audio data is extracted in the transport IC 53, then decoded by the MPEG audio decoder 54, then digital-analog converted by the D/A converter 56, passed through the switch SW1, and transmitted to the storage device 13 from the analog audio output terminal T4.

In the IRD 12, the three output terminals, that is, the IEEE1394 interface 60, optical digital output interface 59 and analog audio output terminal T4, are provided. However, in view of the protection of copyright, audio signals are outputted only to one of these three output terminals. This technique is described in detail in the International Application PCT/JP99/01757 (filed on April 2, 1999) by the present Applicant, and therefore will not described further in detail.

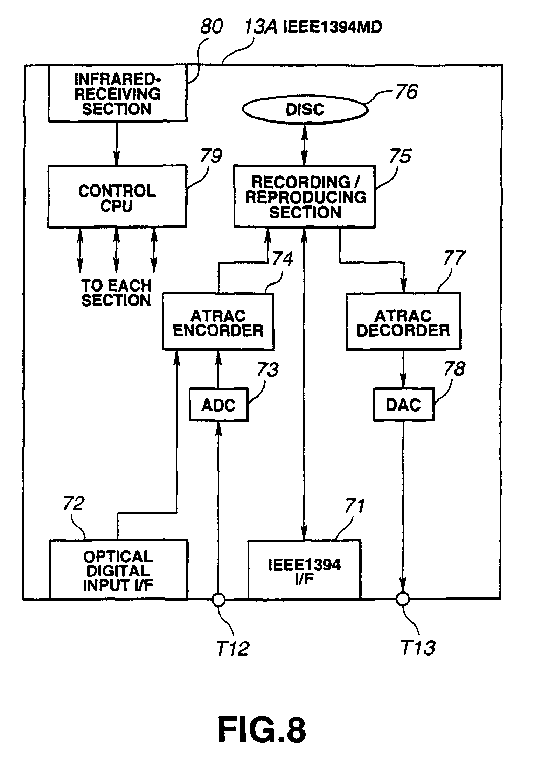

Fig.8 is a block diagram showing an exemplary structure of the IEEE1394 MD. This IEEE1394 MD 13A has an IEEE1394 interface 71, an optical digital input interface 72, an analog audio input terminal T12, and an analog audio output terminal T13.

The IEEE1394 interface 71 is directly connected to a recording/reproducing section 75. The optical digital input interface 72 is connected to the recording/reproducing section 75 via an ATRAC encoder 74. The analog audio input terminal T12 is connected to the ATRAC encoder 74 via an A/D converter 73. The analog audio output terminal T13 is connected to the recording/reproducing section 75 via a D/A converter 78 and an ATRAC decoder 77. A disc 76 is set in the recording/reproducing section 75, which then carries out recording to/reproduction from the disc 76. A control CPU 79 controls the entire IEEE1394 MD 13A. The control CPU 79 is provided with an infrared-receiving section 80 for receiving an infrared signal from the infrared-emitting section 66 of the IRD 12 or an infrared signal from the remote controller (not shown).

The operation of the IEEE1394 MD 13A at the time of recording will now be described.

In the case where the IEEE1394 interface 71 and the IEEE1394 interface 60 of the IRD 12 shown in Fig.6 are connected with each other by a cable which is conformity with the IEEE1394 standard (hereinafter referred to as IEEE1394 cable), audio data of a tune, text data of its lyrics or the like, and still picture data of its jacket or the like transmitted from the IEEE1394 interface 60 are inputted from the IEEE1394 interface 71 and directly recorded onto the disc 76 by the recording/reproducing section 75. In this case, the respective data are recorded onto the disc 76 in accordance with an extended MD format, as will be described later.

In the case where the optical digital input interface 72 and the optical digital output interface 59 of the IRD 12 shown in Fig.6 are connected with each other by an optical cable, PCM audio data inputted from the optical digital input interface 72 is encoded by the ATRAC encoder 74 and then recorded onto the disc 76 by the recording/reproducing section 75.

In the case where the analog audio input terminal T12 and the analog audio terminal T4 shown in Fig.6 are connected with each other by an analog cable, analog audio signals inputted from the analog audio input terminal T12 are analog-digital converted by the A/D converter 73, then encoded by the ATRAC encoder 74, and recorded onto the disc 76 by the recording/reproducing section 75.

In short, in the IEEE1394 MD 13A, the audio data of the tune, the lyrics data and the still picture data of the jacket are recorded only in the case where the IEEE1394 MD 13A is connected with the IRD 12 via the IEEE1394 interface. If the connection between the IEEE 1394 MD 13A and the IRD 12 is the connection via the optical digital interface or the analog audio connection, only the audio data is recorded.

At the time of reproduction, reproduction signals can be outputted from the IEEE1394 interface 71 or the analog audio output terminal T13. In the case where audio data of a tune is recorded on the disc 76 along with its lyrics data and jacket data, in outputting the data from the IEEE1394 interface 71, it is possible to output the tune data to an audio equipment (amplifier or the like) in conformity with the IEEE1394 system and to display the lyrics data and jacket data on an IEEE1394-conformable display unit or print the lyrics data and jacket data by an IEEE1394-conformable printer.

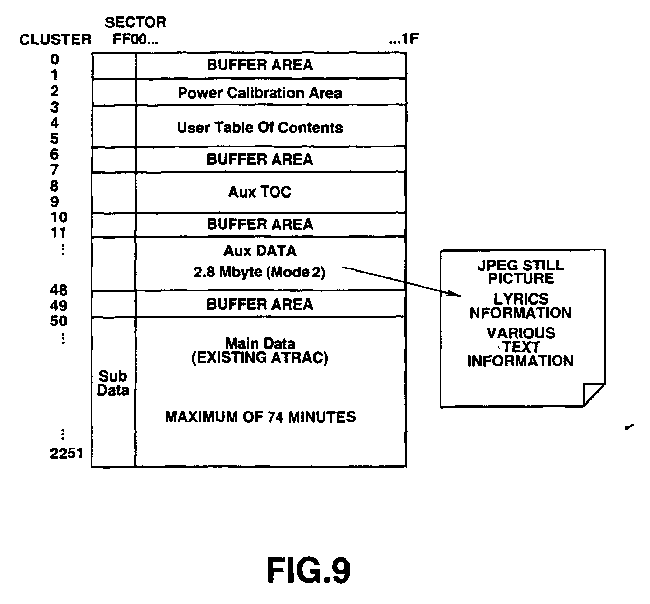

Thus, in the IEEE1394 MD to which the present invention is applied, it is possible to record/reproduce audio data of a tune along with its lyrics data and jacket data. This recording/reproduction is made possible by using an extended MD format as shown in Fig.9. As shown in Fig.9, audio data of a tune is recorded in a main data area in accordance with the ATRAC system. It is the same as in the existing MD format. In the extended MD format, the above-described jacket data and lyrics data are recorded into an auxiliary data area of 2.8 Mbytes. Using this format, the jacket data and lyrics data as well as the audio data of the tune can be recorded/reproduced. Also, the compatibility with the existing MD format can be maintained.

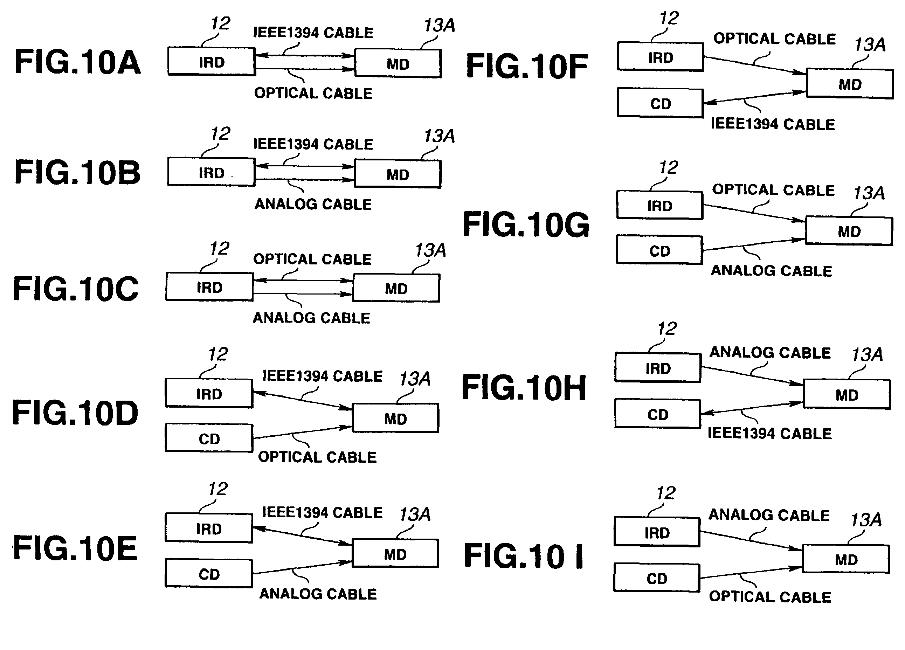

Meanwhile, it may be considered that the IRD 12 and the IEEE1394 MD 13A are connected with each other simultaneously by an optical cable and an IEEE1394 cable as shown in Fig. 10A. It may also be considered that the IRD 12 and the IEEE1394 MD 13A are connected with each other simultaneously by an IEEE1394 cable and an analog cable as shown in Fig. 10B. It may also be considered that the IRD 12 and the IEEE1394 MD 13A are connected with each other simultaneously by an optical cable and an analog cable as shown in Fig. 10C. It may also be considered that the IRD 12 and the IEEE1394 MD 13A are connected with each other simultaneously by an IEEE1394 cable while the IEEE1394 MD 13A and another equipment such as a CD player are connected with each other by an optical cable, as shown in Fig. 10D. It may also be considered that the IRD 12 and the IEEE1394 MD 13A are connected with each other simultaneously by an IEEE1394 cable while the IEEE1394 MD 13A and another equipment such as a CD player are connected with each other by an analog cable, as shown in Fig. 10E. Also, various connection methods as shown in Figs.10F to 10I may be considered. However, in any of these cases, the IEEE1394 MD 13A need be able to automatically discriminate the connection state and to securely down-load a tune received by the IRD 12. The operation of automatically discriminating the connection state of the IEEE1394 MD 13A will be described hereinafter.

In the IEEE1394 format, before starting the transmission of video data and audio data between the connected equipments, bidirectional communication of commands or the like can be carried out to confirm the connection state and the connected equipment with each other. That is, the IEEE1394 MD 13A transmits an Inquiry command to the IRD 12 connected therewith by the IEEE1394 cable and receives an ACK (acknowledge) signal from the IRD 12, thereby confirming the connection state with the IRD 12. When the IRD 12 is connected by the IEEE1394 cable to start down-loading a tune, a down-load start command is transmitted from the IRD 12. Therefore, the connection state can also be recognized by such a command. Moreover, in the case where an Inquiry command issued from the IRD 12 is received, it can be confirmed that the IRD 12 is connected via the IEEE1394 cable.

The control CPU 79 of the IEEE1394 MD 13A monitors whether or not an optical signal can be detected by the optical digital input interface 72, thereby discriminating whether the optical cable is connected to the optical digital input interface 72 and the audio data is being transmitted thereto. In the case where a tune is to be down-loaded by using the optical cable, a control signal such as a down-load start command is transmitted from the infrared-emitting section 66 of the IRD 12 and received by the infrared-receiving section 80 of the IEEE1394 MD 13A.

Moreover, when the control CPU 79 determines that the IEEE1394 cable and the optical cable are not connected, or that, signals are not being supplied, it determines to execute the down-load of the tune by using the analog cable.

In this manner, the control CPU 79 of the IEEE1394 MD 13A can recognize the connection state with the IRD 12.

In response to the connection state thus detected, the control CPU 79 switches the output signals of the ATRAC encoder 74 and the IEEE1394 interface 71 so as to control the recording operation to the disc 76.

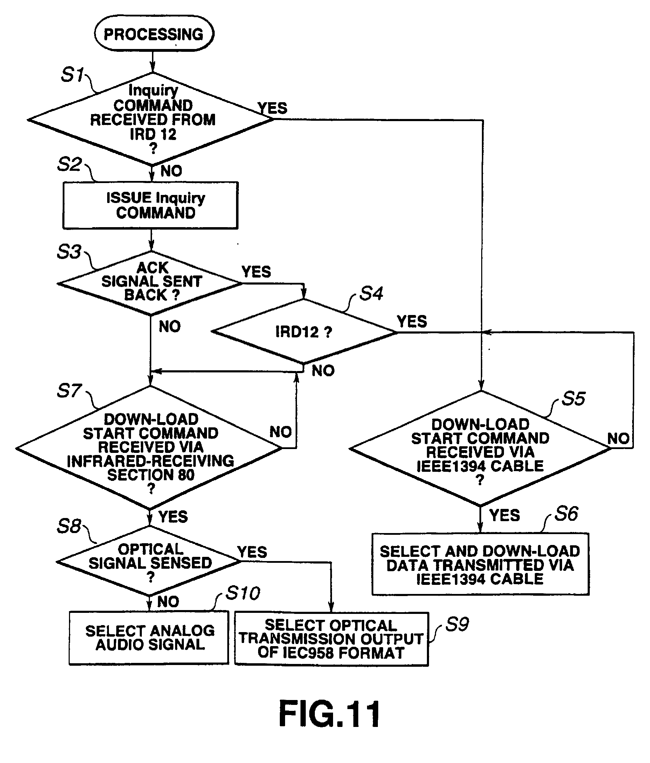

Fig. 11 shows a flowchart of the processing procedures of the control CPU 79 of the IEEE1394 MD 13A according to the embodiment of the present invention.

First, at step S1, it is determined whether or not the IEEE1394 interface 71 of Fig.8 has already received an Inquiry command from the IRD 12. If the Inquiry command has been received from the IRD 12 (Yes at step S1), it is determined that down-loading of a tune via the IEEE1394 cable should be carried out. Then, the processing shift to step S5 and it is determined whether or not a down-load start command has been received via the IEEE1394 cable. If it is determined at step S5 that the down-load start command has been received, the processing shifts to step S6 and down-loading of tune data transmitted from the IEEE1394 cable is carried out.

On the other hand, if it is determined at step S1 that the Inquiry command has not be received from the IRD 12, the control CPU 79 at step S2 issues the Inquiry command and outputs it to the IEEE1394 cable. At step S3, it is determined whether or not an ACK signal is sent back from the equipment connected to the IEEE1394 cable. If the ACK signal is sent back (Yes at step S3), it is determined at step S4 whether or not the ACK signal is from the IRD 12. It the received ACK signal is from the IRD 12 (Yes at step S4), it is determined that down-loading of a tune via the IEEE1394 cable should be carried out and the processing shifts to step S5. The subsequent processing is as described above.

If the ACK signal is not received at step S3 (No at step S3), it is determined that the IEEE1394 is not connected. If it is determined at step S4 that the received ACK signal is not from the IRD 12 (No at step S4), it is determined that the IRD 12 is not connected by the IEEE1394 cable. In both case, the processing shift to step S7. At step S7, it is determined whether or not a down-load start command has been received via the infrared-receiving section 80. If it is determined at step S7 that the down-load start command has been received (Yes at step S7), it is determined at step S8 whether an optical signal can be detected or not. If it is determined that an optical signal can be detected, the processing shifts to step S9 and it is determined that down-loading of the tune should be carried out. On the other hand, if it is determined at step S8 that an optical signal cannot be detected, it is determined that down-loading of the tune should be executed via the analog cable.

By such processing of the control CPU 79, the tune received by the IRD 12 can be securely down-loaded.

Specifically, in the cases of Figs.10A and 10B, since the IRD 12 and the IEEE1394 MD 13A are connected with each other by the IEEE1394 cable, Yes is obtained at step S1 or step S4 and down-loading of the tune via the IEEE1394 cable is preferentially carried out rather than via the optical cable or the analog cable.

In the case of Fig.10C, as a result of step S8, the optical cable is selected if the audio data is sent from the IRD 12 through the optical cable, and the analog cable is selected if the audio data is not sent through the optical cable from the IRD 12. Therefore, the tune can be securely down-loaded.

In the cases of Figs.10D and 10E, since IRD 12 and the IEEE1394 MD 13A are connected with each other by the IEEE1394 cable, Yes is obtained at step S1 or step S4 and down-loading of the tune via the IEEE1394 cable is preferentially carried out rather than via the optical cable or the analog cable.

In the cases of Figs. 10F and 10G, Yes is obtained at step S8 and down-loading of the tune via the optical cable is carried out.

In the cases of Figs. 10H and 10I, No is obtained at step S8 and down-loading of the tune via the analog cable is carried out.

Although the compression method of the ATRAC system is used in the above-described embodiment, an audio layer of the MPEG system may be used. Also, though the system for receiving and recording data transmitted from the satellite is employed in the above-described embodiment, the present invention can also be applied to a system for receiving and recording data transmitted through a public network such as an analog telephone line or ISDN (Integrated Service Digital Network), and a system for receiving and recording data transmitted through a cable of CATV (cable television) or the like.

### Industrial Applicability

According to the present invention, if it is determined that both a cable capable of unidirectional transmission and a cable capable of bidirectional transmission are connected, data transmitted from the cable capable of bidirectional transmission can be preferentially received or recorded. Therefore, even in the case where both the cable capable of unidirectional transmission and the cable capable of bidirectional transmission are connected, the data through both cables can be received without mixing the data.

Also, according to the down-load system of the present invention, not only main data but also sub data such as image data and text data can be recorded.

## Claims

1. An electronic equipment comprising:
a first connection terminal to which a first cable capable of bidirectional signal transmission is connected;
a second connection terminal to which a second cable capable of unidirectional signal transmission is connected;
communication means for communicating with an equipment connected via the first cable; and
processing means for switching the first connection terminal and the second connection terminal so as to carry out predetermined processing with respect to a received signal;
the processing means preferentially switching the first connection terminal rather than the second connection terminal in the case where it is confirmed as a result of the communication by the communication means that a desired equipment is connected to the first connection terminal.

2. The electronic equipment as claimed in claim 1, wherein a signal transmitted via the first cable is a digital signal.

3. The electronic equipment as claimed in claim 1, wherein the second cable is an optical cable, through which a digital signal is transmitted.

4. The electronic equipment as claimed in claim 1, wherein the second cable is an analog cable, through which an analog signal is transmitted.

5. The electronic equipment as claimed in claim 1, wherein the signal is an audio signal.

6. The electronic equipment as claimed in claim 5, wherein the processing means records a received audio signal to a recording medium.

7. The electronic equipment as claimed in claim 3, further comprising optical sensing means provided closely to the second connection terminal for sensing a light of the optical cable,
wherein if it is confirmed as a result of the communication by the communication means that a desired equipment is not connected to the first connection terminal, the processing means selects the optical cable on the basis of the result of detection by the optical sensing means.

8. The electronic equipment as claimed in claim 7, further comprising control signal receiving means for receiving a remote control signal,
wherein optical sensing processing by the optical sensing means is started in the case where the control signal receiving means has received a predetermined control signal.

9. The electronic equipment as claimed in claim 7, further comprising a third connection terminal to which an analog cable is connected,
wherein if optical sensing has not been done by the optical sensing means, the processing means selects the analog cable.

10. A signal processing method for an electronic equipment having a first connection terminal to which a first cable capable of bidirectional signal transmission is connected and a second connection terminal to which a second cable capable of unidirectional signal transmission is connected, the method comprising:
communicating with another equipment via the first cable;
preferentially switching the first connection terminal rather than the second connection terminal in the case where it is confirmed as a result of the communication that a desired equipment is connected to the first connection terminal; and
carrying out processing of a signal received via the switched first connection terminal.

11. The signal processing method as claimed in claim 10, wherein the second cable is an optical cable, through which a digital signal is transmitted.

12. The signal processing method as claimed in claim 10, wherein the electronic equipment further comprises an optical sensing section provided closely to the second connection terminal for sensing a light of the optical cable, and
wherein if it is confirmed as a result of the communication that a desired equipment is not connected to the first connection terminal, the optical cable is selected on the basis of the result of detection by the optical sensing section.

13. The signal processing method as claimed in claim 12, wherein the electronic equipment further comprises a control signal receiving section for receiving a remote control signal, and
wherein optical sensing processing by the optical sensing section is started in the case where the control signal receiving section has received a predetermined control signal.

14. The signal processing method as claimed in claim 12, wherein the electronic equipment further comprises a third connection terminal to which an analog cable is connected, and
wherein if optical sensing has not been done by the optical sensing section, the analog cable is selected.

15. An input signal switching method comprising: discriminating whether or not a cable capable of bidirectional transmission is connected to a desired equipment; and in the case where it is determined that the cable is connected to the desired equipment, preferentially switching to the cable capable of bidirectional transmission rather than a cable capable of unidirectional transmission.

16. A down-load system comprising
a receiving device having:
a receiving section for receiving data distributed from an information center;
a separation section for performing predetermined signal processing on the data received by the receiving section and thus separating main data and sub data;
a first transmission section for transmitting the main data separated by the separation section; and
a second transmission section for transmitting the main data and the sub data, and
a recording device having:
a first connection terminal connected to the first transmission section via a cable capable of unidirectional transmission;
a second connection terminal connected to the second transmission section via a cable capable of bidirectional transmission;
discrimination means for discriminating whether or not the receiving device is connected to the second connection terminal via the cable capable of bidirectional transmission; and
recording means for recording the data supplied from the first connection terminal or the second connection terminal,
wherein in the case where it is discriminated by the discrimination means that the receiving device is connected via the cable capable of bidirectional transmission, the cable capable of bidirectional transmission connected to the second connection terminal is preferentially selected rather than the cable capable of unidirectional transmission connected to the first connection terminal so that the data transmitted via the cable capable of bidirectional transmission is recorded.

17. The down-load system as claimed in claim 16, wherein the main data is digital audio data of a musical tune and the sub data is data appended to the musical tune.

18. The down-load system as claimed in claim 16, wherein the cable capable of unidirectional transmission is an optical cable.

19. The down-load system as claimed in claim 18, wherein the receiving device further comprises a remote control signal generating section for generating a remote control signal for controlling the recording device,
the recording device comprises a control signal receiving section for receiving the remote control signal, and an optical sensing section provided closely to the first connection terminal for sensing a light of the optical cable, and
if, as a result of the discrimination, it is discriminated that the receiving device is not connected via the cable capable of bidirectional transmission and a predetermined control signal has been received via the control signal receiving section, the optical cable is selected on the basis of the result of detection by the optical sensing section.

20. The down-load system as claimed in claim 19, wherein the receiving device further comprises a third transmission section for transmitting an analog signal obtained by converting the main data to the analog signal,
the recording device comprises a third connection terminal which is connected to the third transmission section via an analog cable, and
if, as a result of the discrimination, it is discriminated that the receiving device is not connected via the cable capable of bidirectional transmission, and a predetermined control signal has been received via the control signal receiving section, and a light has not been sensed by the optical sensing section, the analog cable is selected.
